# FASCICULE DE BREVET EUROPEEN

(11) **EP 3 645 784 B1**
(45) Date de publication et mention de la délivrance du brevet: **18.10.2023**
(21) Numéro de dépôt: 18728685.1
(22) Date de dépôt: 02.05.2018
(51) Int. Cl.: D06N 3/14, D06Q 1/12, B05D 1/28, B05D 3/04, B05D 5/06

(54) **PROCÉDÉ DE RÉALISATION EN CONTINU D'UN MOTIF A LA SURFACE D'UN SUBSTRAT SOUPLE**
VERFAHREN ZUR KONTINUIERLICHEN HERSTELLUNG EINES MUSTERS AN DER OBERFLÄCHE EINES FLEXIBLEN SUBSTRATS
METHOD FOR CONTINUOUSLY PRODUCING A PATTERN AT THE SURFACE OF A FLEXIBLE SUBSTRATE

(30) Priorité: 27.06.2017 FR 1755901
(43) Date de publication de la demande: 06.05.2020
(73) Titulaire: F.D.S., 69730 Genay (FR)
(72) Inventeur: SERRE, Philippe, 69660 Collonges-au-Mont-d'Or (FR)
(74) Mandataire: Weber, Jean-François
(86) Numéro de dépôt international: PCT/FR2018/051086
(87) Numéro de publication internationale: WO 2019/002706

(56) Documents cités:
- EP-A2- 0 184 925
- WO-A1-98/06891
- WO-A1-2010/073949
- US-A- 4 786 349

## Description

### DOMAINE TECHNIQUE

La présente invention se rapporte au domaine général des procédés de réalisation de motifs par enduction sur des substrats souples. L'invention concerne également le domaine technique des installations de mise en oeuvre de tels procédés.

L'invention concerne plus précisément un procédé de réalisation en continu d'un motif à la surface d'un substrat souple, comprenant une étape de formation d'un motif primaire au moyen d'une opération d'enduction dudit substrat avec une composition thermofusible qui se trouve à l'état fondu.

Est décrite en outre une installation pour la réalisation en continu d'un motif à la surface d'un substrat souple, comprenant un poste de formation d'un motif primaire au moyen d'un dispositif d'enduction dudit substrat avec une composition thermofusible qui se trouve à l'état fondu.

### TECHNIQUE ANTERIEURE

On connait déjà un procédé et une installation associée de réalisation d'un motif en relief à la surface d'un substrat souple, qui mettent en oeuvre une composition thermofusible à base d'un matériau polymère. Préalablement portée à l'état fondu, cette composition est déposée par enduction sur le substrat souple, de manière à former à la surface de ce dernier une ébauche de motif qui, après refroidissement et solidification de la composition, conduit à l'obtention du motif en relief recherché.

Si un tel procédé et une telle installation associée sont généralement de mise en oeuvre relativement simple, le motif réalisé à l'aide de ces derniers n'offre pas toujours satisfaction en terme, en particulier, de résistance physico-chimique. Plus spécifiquement encore, la résistance mécanique dudit motif aux températures élevées, à la délamination, et à l'abrasion (notamment suite à des cycles de frottement répétés du substrat enduit) peut se révéler insuffisante. En outre, la résistance chimique du motif, en particulier aux solvants, peut également s'avérer parfois limitée pour certaines applications du substrat enduit.

Le document WO 98/06891 A1 décrit un procédé de fabrication d'un matériau de doublure composite destiné à un vêtement ou similaire, qui comprend un substrat souple perméable à la vapeur d'eau, résistant à l'eau, portant un tissu fixé sur un premier côté. Le second côté du substrat porte une couche discontinue résistante à l'abrasion, constituée d'une pluralité de pastilles polymères discontinues résistantes à l'abrasion.

Les objets assignés à l'invention visent en conséquence à porter remède aux inconvénients exposés dans ce qui précède et à proposer un nouveau procédé qui permet la réalisation par enduction de motifs particulièrement résistants, et ce de manière simple, efficace et sans toutefois nécessiter la mise en oeuvre de compétences ou de moyens techniques spécifiques complexes.

Un autre objet de l'invention vise à proposer un nouveau procédé qui permet de traiter un substrat souple en continu, pour un coût de revient maîtrisé.

Un autre objet de l'invention vise à proposer un nouveau procédé qui permet la réalisation de motifs dotés de fonctions à la fois esthétiques et fonctionnelles.

Un autre objet de l'invention vise à proposer un nouveau procédé qui permet de réaliser, de manière fiable, répétable, simple et efficace, un motif à la surface de substrats souples de nature et composition très variées.

### EXPOSE DE L'INVENTION

Les objets assignés à l'invention sont atteints à l'aide d'un procédé selon la revendication 1.

### DESCRIPTIF SOMMAIRE DES DESSINS

D'autres objets et avantages de l'invention apparaîtront mieux à la lecture de la description qui suit, ainsi qu'à l'aide des figures annexées, fournies à titre purement explicatif et non limitatif, parmi lesquelles :
- Les figures 1 à 5 illustrent, de manière schématique et en vue de dessus, différents exemples du motif qui peut être avantageusement réalisé grâce au procédé selon l'invention ;
- La figure 6 illustre, de manière schématique, un mode de réalisation préférentiel d'une installation non revendiquée.

### MEILLEURE MANIERE DE REALISER L'INVENTION

L'invention concerne un procédé de réalisation en continu d'un motif, de préférence prédéfini, à la surface d'un substrat. Il s'agit préférentiellement d'un procédé industriel, avantageusement automatisé, permettant de traiter de manière sensiblement ininterrompue une grande superficie d'un substrat donné.

Selon l'invention, ledit substrat est un substrat souple, c'est-à-dire qu'il constitue un support sensiblement dépourvu de rigidité propre et, au contraire, pourvu d'une certaine flaccidité autorisant sa déformation, notamment sous l'effet de son propre poids. De préférence, ledit substrat se présente sous la forme d'une nappe surfacique souple, et plus spécifiquement et avantageusement sous la forme d'une bande longue, par exemple d'une laize de 150 cm, d'un matériau (ou d'un assemblage de matériaux) présentant une souplesse et une flexibilité suffisante pour être enroulée ou repliée sur elle-même. De préférence, le procédé de l'invention comprend une étape de fourniture du substrat à traiter, lequel peut éventuellement se présenter en bobine de plus ou moins grand métrage.

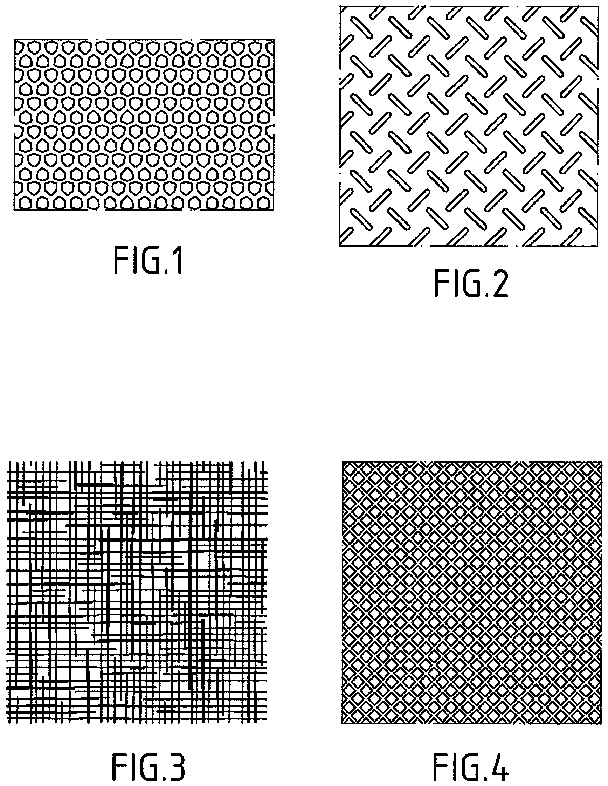

Comme évoqué ci-avant, ledit motif est réalisé, selon le procédé de l'invention, à la surface dudit substrat, c'est-à-dire au voisinage immédiat de la surface de l'une et / ou de l'autre des faces opposées de ce dernier. Le motif peut ainsi être réalisé soit en relief, et faire alors saillie de manière observable (en particulier à l'oeil nu ou au toucher) de la surface du substrat, soit sensiblement « *à plat* » sur la surface de ce dernier, soit encore dans l'épaisseur dudit substrat de sorte à affleurer la surface de ce dernier. Ledit motif pourra être doté d'une fonction purement esthétique, et viser alors uniquement à conférer au substrat considéré un aspect visuel ou un toucher particulier et distinctif, et / ou d'une fonction technique, visant par exemple à améliorer la résistance dudit substrat à l'abrasion et à l'usure. La forme générale de ce motif n'est toutefois pas spécifiquement limitée, et pourra varier selon l'application visée et la fonction recherchée, qu'elle soit fonctionnelle (fonction anti-abrasion (figures 1 et 3) ou antidérapante (figures 2 et 4), par exemple) ou esthétique, voire à la fois fonctionnelle et esthétique.

Selon une variante, illustrée aux figures 1 et 2, le motif réalisé selon le procédé de l'invention est un motif discret, c'est-à-dire discontinu. II pourra, par exemple, être formé d'une pluralité de points ou éléments ponctuels distincts et espacés les uns des autres, identiques ou non. Ainsi, ledit motif pourra, par exemple, être formé d'un ensemble d'éléments de forme circulaire, d'éléments présentant la forme polygonale générale d'un « *bouclier* » (figure 1), d'éléments en « *pointe de diamant* » ou en forme de grains de riz (figure 2), ou encore d'éléments en forme de chevron (forme en « *Λ* » ou en « *V* » renversé). En particulier, dans le cas où ledit motif aura vocation à améliorer la résistance du substrat à l'abrasion, on pourra avantageusement choisir un motif formé de points ou éléments distincts relativement proches les uns des autres, typiquement espacés de moins de 5 mm, de préférence de moins de 1 mm (par exemple de 0,8 mm dans l'exemple illustré à la figure 1).

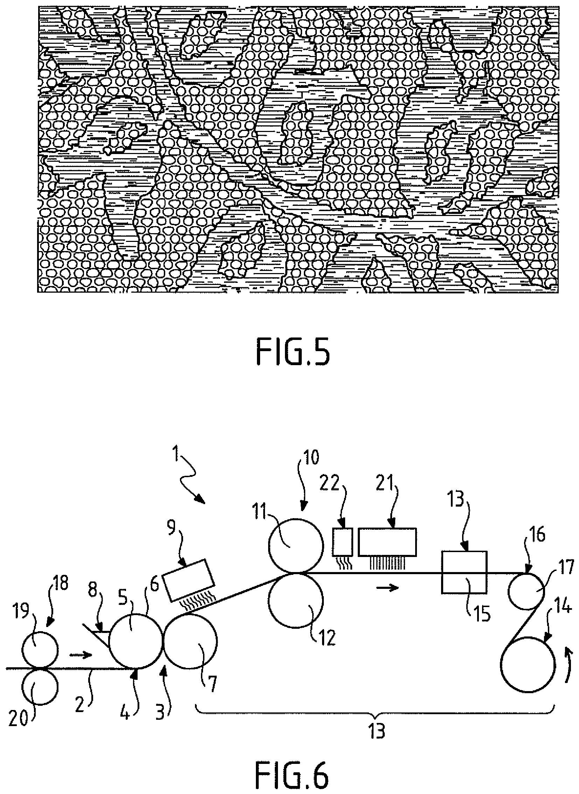

Selon une autre variante, illustrée aux figures 3 à 5, ledit motif pourra au contraire être continu et ajouré, et se présenter par exemple comme un entrecroisement de lignes (figure 3), matérialisant par exemple un réseau continu résistant au facteur d'abrasion ou offrant un effet « *givré* », sous la forme d'une grille (figure 4), ou encore sous la forme d'un dessin ornemental, par exemple en dentelle (figure 5). Avantageusement, les points ou éléments du motif réalisé ne recouvrent pas la totalité de la superficie dudit substrat, afin que le substrat traité par le procédé selon l'invention conserve une certaine souplesse, notamment suffisante pour autoriser un éventuel enroulement ultérieur dudit substrat traité.

Afin de réaliser un tel motif, le procédé selon l'invention comprend une étape de formation d'un motif primaire, c'est-à-dire d'un pré-motif qui préfigure le motif (ou motif final) que l'on cherche à réaliser et à obtenir *in fine* à la surface du substrat souple considéré. Selon l'invention, cette étape est réalisée au moyen d'une opération d'enduction dudit substrat avec une composition thermofusible qui se trouve à l'état fondu (procédé « *hotmelt* »). A la différence d'autres techniques d'enduction connues, l'opération d'enduction du procédé de l'invention ne met ainsi pas en œuvre de composition liquide en phase aqueuse ou solvant. Employant une composition qui, à l'état initial, se trouve au contraire avantageusement sous forme 100 % solide, ladite opération d'enduction est donc de mise en oeuvre particulièrement facile et sûre, et ne nécessite en particulier aucune opération complexe et coûteuse de récupération et de retraitement d'eaux résiduelles ou de solvants organiques dangereux pour l'homme et l'environnement.

Plus spécifiquement, ladite composition est, selon l'invention, une composition à base de polyuréthane réactif qui est réticulable à l'humidité (en présence ou non d'un catalyseur) pour former un polyuréthane thermodurcissable, et plus précisément et avantageusement encore, une composition d'adhésif thermofusible à base de polyuréthane réactif (HMPUR). De manière particulièrement avantageuse, ladite composition sera choisie pour sa capacité à former, après refroidissement et réticulation, un polyuréthane thermodurcissable résistant à des températures particulièrement élevées, par exemple 200°C pendant 60 s.

Le procédé de l'invention comprend également, après ladite opération d'enduction, une étape de réticulation à l'humidité de la composition formant le motif primaire pour obtenir, à partir dudit motif primaire, un motif secondaire en polyuréthane thermodurcissable, totalement réticulé et donc non réactif. De préférence, ledit motif secondaire forme alors directement le motif final que l'on cherche à réaliser. Alternativement, et sans sortir pour autant du cadre de l'invention, le procédé selon l'invention pourra optionnellement comprendre une ou plusieurs étapes additionnelles (traitement de surface, etc.) visant par exemple à modifier l'apparence ou les propriétés dudit motif secondaire en vue d'obtenir *in fine* ledit motif final.

Ainsi, l'obtention du motif secondaire à partir du motif primaire se fait, d'une part, de manière physique par refroidissement et figeage de la composition formant le motif primaire (passage de l'état fondu à l'état solide, figé) et, d'autre part, de manière chimique et irréversible par réticulation de cette dernière.

Au cours de ladite étape de réticulation, et de préférence jusqu'à la fin de cette dernière, ledit motif primaire reste de préférence à l'air libre, c'est-à-dire que la surface du motif primaire qui n'est pas en contact avec le substrat reste libre. En d'autres termes, le motif primaire n'est pas destiné, en tant que tel, à assurer le collage du substrat souple avec une éventuelle couche additionnelle qui serait superposée audit motif primaire et audit substrat.

Le choix d'une telle composition thermofusible est particulièrement intéressant au sens notamment où, à la différence d'une composition polymérique thermoplastique, la composition du procédé selon l'invention conduit à l'obtention d'un motif en un matériau polymère thermodurcissable (en l'espèce, un polyuréthane) qui est donc non fusible et insoluble. Le motif réalisé selon le procédé de l'invention présente ainsi une excellente résistance mécanique et chimique, en particulier à l'abrasion et à la délamination, même après un grand nombre de cycles de frottement du substrat enduit. Ledit motif présente, de plus, une excellente tenue en température. En particulier, selon la nature de la composition d'adhésif thermofusible à base de polyuréthane réactif choisie, le motif obtenu à partir de cette dernière est susceptible de résister à des températures allant de -40°C jusqu'à parfois plus de 150°C sans voir ses propriétés mécaniques significativement dégradées. II devient ainsi notamment avantageusement possible de soumettre un substrat traité selon le procédé de l'invention à une opération ultérieure de thermoformage, visant par exemple à conférer à ce dernier une configuration spatiale tridimensionnelle, sans pour autant dégrader le motif réalisé.

En outre, à la différence de compositions thermofusibles réticulables à chaud ou sous irradiation UV, une telle composition réticulable à l'humidité ne nécessite pas forcément d'équipement ou de moyen technique de réticulation spécifique et complexe, la réticulation pouvant en effet intervenir sous la seule action de l'humidité relative de l'air ambiant environnant ou de celle contenue dans ledit substrat. Cela signifie que l'étape de réticulation du procédé selon l'invention peut alors avantageusement correspondre à une étape passive, c'est-à-dire une étape au cours de laquelle on laisse la composition du motif primaire réticuler naturellement à l'humidité ambiante, sans intervention externe particulière.

De préférence, ladite composition thermofusible sera choisie avec un temps ouvert très court, par exemple compris entre 15 et 30 s, et une réticulation totale en 24 h environ sous un taux d'humidité relative de 55 % pour une épaisseur de motif primaire de l'ordre de 500 µm.

Selon l'invention, ladite opération d'enduction est réalisée par transfert de ladite composition à l'état fondu sur le substrat souple à l'aide d'un cylindre gravé, c'est-à-dire à l'aide d'un cylindre dont la surface externe est pourvue d'une ou plusieurs cavités (ou cellules), destinées à recevoir ladite composition fondue et dont la forme est représentative de celle dudit motif primaire, par transfert direct depuis ledit cylindre gravé sur ledit substrat souple. En d'autres termes, ladite opération d'enduction ne met avantageusement en oeuvre aucun tapis ou support de transfert intermédiaire, sur lequel serait réalisé le motif primaire par dépôt de ladite composition fondue, avant transfert dudit motif primaire sur ledit substrat.

De préférence, ladite composition thermofusible est préalablement portée à l'état fondu, de préférence à une température comprise entre 80 et 170°C et par exemple dans un fondoir adapté, avant d'être déposée à la surface dudit cylindre gravé pour venir emplir la ou les cavités présentes à la surface de ce dernier. Une racle, ou un dispositif similaire, peut avantageusement être mise en oeuvre pour évacuer l'excès de composition fondue en surface du cylindre. Avantageusement, la surface du cylindre gravé est portée et maintenue à une température élevée, de préférence sensiblement voisine de la température de fusion de ladite composition, de sorte à contrôler précisément la viscosité de cette dernière. En effet, la maîtrise de la viscosité de la composition fondue permet de favoriser un bon remplissage / vidage des cavités du cylindre gravé et de contrôler (c'est-à-dire de favoriser ou au contraire d'éviter) l'éventuelle diffusion, sur et dans l'épaisseur du substrat, de la composition déposée. De préférence, la surface du substrat à enduire est alors amenée en contact direct avec la surface externe du cylindre gravé, et préférentiellement maintenue plaquée (au moins localement) contre ce dernier à l'aide d'un contre-cylindre. Ainsi, la rotation du cylindre gravé permet le transfert direct sur ledit substrat de ladite composition fondue.

Alternativement, une opération d'enduction réalisée par transfert à l'aide d'un cadre rotatif pourra être envisagée. Alternativement encore, ladite opération d'enduction pourra être réalisée à l'aide d'une ou plusieurs buses, mobile ou non, conçue pour venir déposer ladite composition, à l'état fondu, à la surface du substrat.

Avantageusement, le procédé selon l'invention pourra comprendre une opération de réchauffage primaire (par exemple à l'aide d'un radiant IR primaire) du motif primaire formé. De préférence, immédiatement consécutive à ladite étape d'enduction, cette opération de réchauffage primaire favorisera avantageusement l'obtention de la définition recherchée dudit motif primaire, en régulant la viscosité de la composition formant ce dernier et en évitant notamment que la composition qui forme ledit motif primaire ne fige trop rapidement. En particulier, on limitera ainsi les défauts de forme qui pourraient être observés en cas de figeage trop rapide de la composition immédiatement après le dépôt de celle-ci sur le substrat.

Optionnellement, le procédé selon l'invention pourra également comprendre, après ladite étape de formation du motif primaire, une étape de laminage de la surface du substrat, au niveau de laquelle a été formé ledit motif primaire, de manière à contrôler l'épaisseur et l'aspect de surface (aplanissement, matification, etc.) de ce dernier, et *l* ou sa profondeur de pénétration dans l'épaisseur du substrat.

De préférence, le procédé selon l'invention comprend, après ladite étape de formation du motif primaire, une étape d'enroulement (par exemple sous forme de bobine), d'empilement ou de repli sur lui-même du substrat souple enduit, en vue par exemple de son transport et d'éventuelles opérations de transformation ou de confection à l'issue du procédé de l'invention.

Afin d'autoriser une cadence de production industrielle la plus élevée possible, il a été jugé désirable qu'une telle étape d'enroulement intervienne dans ce cas le plus rapidement possible après ladite étape de formation du motif primaire. Cependant, si la composition formant ledit motif primaire n'est pas encore suffisamment réticulée, il existe un risque important de déformation du motif primaire lors de l'étape d'enroulement et donc d'obtention d'un motif final non conforme aux attentes. Ce phénomène est particulièrement problématique dans le cas où le motif que l'on cherche à réaliser à la surface du substrat est un motif en relief.

Pour lever ce risque, l'étape de réticulation du procédé de l'invention comprend de préférence une opération de pré-réticulation de la composition formant le motif primaire, de sorte que, à l'issue de cette opération de pré-réticulation, la composition formant le motif primaire a suffisamment réticulé, c'est-à-dire que la réaction de réticulation est suffisamment initiée et avancée, pour assurer une cohésion suffisante du motif primaire et éviter ainsi toute déformation intempestive et irréversible de ce dernier.

A ce titre, l'étape de réticulation du procédé de l'invention inclut de préférence une opération de soumission dudit motif primaire à un flux, forcé ou non, d'un gaz ou d'un mélange gazeux chargé en humidité (par exemple un flux de vapeur d'eau ou d'air humidifié). En d'autres termes, l'étape de réticulation à l'humidité du procédé de l'invention est au moins en partie active, c'est-à-dire forcée et contrôlée. Réalisée de préférence après l'éventuelle étape de laminage envisagée ci-dessus, cette opération d'apport localisé en humidité vise à accélérer sensiblement la réaction de réticulation de la composition formant ledit motif primaire, en augmentant artificiellement l'humidité relative de l'air ambiant et du substrat au niveau du motif primaire formé.

Le débit de ce flux de gaz ou de mélange gazeux chargé en humidité sera avantageusement contrôlé et régulé pour tenir compte des éventuelles variations de conditions environnementales et climatiques, de la nature du substrat (matériau, porosité à l'humidité, etc.) et de l'épaisseur du motif primaire formé.

De la sorte, il est avantageusement possible d'obtenir des vitesses d'enroulement satisfaisantes, ladite étape d'enroulement pouvant être avantageusement réalisée après (et de préférence immédiatement après) ladite opération de pré-réticulation et avant la fin de ladite étape de réticulation, et ce sans impact notable sur le motif final obtenu. L'étape de réticulation peut ensuite se poursuivre alors que le substrat enduit est enroulé, empilé ou replié sur lui-même, sous l'effet d'une part de l'humidité relative naturelle de l'air ambiant, mais également avantageusement d'autre part sous l'effet de l'humidité retenue par le substrat lui-même et résultant de l'apport en humidité susmentionné.

Alternativement, une telle opération de soumission du motif primaire à un flux gazeux chargé en humidité pourrait tout à fait être mise en oeuvre, sur une échelle de temps éventuellement plus importante, pour assurer la réticulation complète (et non seulement une réticulation partielle) de la composition formant ledit motif primaire et obtenir ainsi ledit motif secondaire de polyuréthane totalement réticulé.

En outre, le procédé de l'invention comprend préférentiellement, avant ladite étape d'enroulement, d'empilement ou de repli sur lui-même du substrat souple enduit, une étape de refroidissement forcé de la composition du motif primaire. Si la composition du motif primaire peut refroidir naturellement et progressivement sous l'effet de l'atmosphère ambiante, une telle étape de refroidissement forcé permet avantageusement d'accélérer son refroidissement, de manière à ce que ladite composition formant le motif primaire ait suffisamment refroidi et figé pour éviter tout risque de collage du substrat souple enduit sur lui-même, du fait de la pégosité résiduelle de ladite composition, lors de l'enroulement. Ladite étape de refroidissement forcé peut être réalisée à l'aide de tout moyen connu, et par exemple par passage du substrat enduit sur un ou plusieurs cylindres refroidisseurs. On pourra en outre envisager la mise en oeuvre d'un flux d'air froid, d'air ou de gaz inerte comprimé, ou encore la mise en contact du substrat enduit avec de la carboglace.

Il est à noter qu'une telle étape de refroidissement optionnelle peut tout à fait être indépendante de ladite étape de réticulation, et en particulier de ladite opération de pré-réticulation. Elle peut dès lors avantageusement être réalisée avant ou après celles-ci, ou encore de manière concomitante. Egalement, la mise en oeuvre respective de ladite opération de soumission dudit motif primaire à un flux gazeux chargé en humidité et de ladite étape de refroidissement de la composition du motif primaire n'est absolument pas liée de manière exclusive à la mise en oeuvre d'une étape d'enroulement, d'empilement ou de repli sur lui-même du substrat souple enduit. Ainsi, il reste parfaitement envisageable de mettre en oeuvre une telle opération d'apport en humidité et 1 ou une telle étape de refroidissement, en l'absence de toute étape de d'enroulement, d'empilement ou de repli, par exemple en vue de pouvoir procéder à d'éventuelles étapes ou opérations de traitement additionnelles ultérieures, le plus rapidement après ladite étape d'enduction.

Le substrat souple concerné par le procédé de l'invention comprend une étoffe, c'est-à-dire une pièce surfacique textile. Une telle étoffe peut être obtenue par tout procédé connu, et par exemple par tricotage, par tissage, par voie papetière (étoffe non-tissée « *wet laid* ») ou encore par voie sèche selon un procédé aérodynamique (étoffe non-tissée « *air laid* ») de fibres ou de fils naturel(le)s (coton, lin, laine, soie, cellulose, etc.), synthétiques (polyester, polyamide, aramide, verre, carbone, inox, etc.), ou encore d'un mélange de telles fibres (ou fils) naturelles ou synthétiques. Ladite étoffe est choisie poreuse à l'humidité, et en particulier à la vapeur d'eau ou à l'air humide. Ladite étoffe est également choisie poreuse à ladite composition à base de polyuréthane réactif réticulable à l'humidité lorsque cette dernière se trouve à l'état fondu, de sorte à autoriser une pénétration de ladite composition dans une partie au moins de l'épaisseur de ladite étoffe.

Ladite opération d'enduction est réalisée directement sur ladite étoffe, ladite composition à base de polyuréthane réactif réticulable à l'humidité pénétrant au moins en partie l'épaisseur de cette dernière. En d'autres termes, l'opération d'enduction est réalisée directement à la surface de ladite étoffe, en l'absence donc de toute couche intermédiaire entre la surface de cette dernière et la
composition déposée formant le motif primaire. Cela n'exclut cependant pas que les fibres ou fils de ladite étoffe ait pu elles-mêmes recevoir un traitement de surface visant, par exemple, à conférer à ladite étoffe un caractère déperlant. On favorise de la sorte un ancrage efficace et durable audit substrat du motif secondaire, et donc du motif final, après réticulation de la composition formant le motif primaire, et on limite ainsi avantageusement le risque de délamination, d'arrache, dudit motif.

La profondeur de pénétration de la composition dans ladite étoffe peut avantageusement être contrôlée par une régulation adéquate de la viscosité de ladite composition à l'état fondu (via par exemple le choix de la température de mise en oeuvre ou encore le choix de la nature chimique de ladite composition), ou encore, optionnellement, par l'effort de compression exercé sur le motif primaire lors de l'étape de laminage additionnelle évoquée ci-avant.

Selon une alternative non revendiquée, ledit substrat pourra au contraire être formé d'un film, d'une feuille ou d'une membrane souple, par exemple en matériau polymère (PVC, polyéthylène, etc.) ou métal (aluminium, etc.).

Avantageusement, le procédé selon l'invention pourra comprendre, préalablement à ladite étape de formation dudit motif primaire, une étape de traitement de surface visant à augmenter la tension de surface dudit substrat souple. Par exemple de type traitement Corona ou plasma, une telle étape de traitement de surface permet avantageusement d'améliorer l'adhésion de la composition déposée sur le substrat, lorsque ce dernier présente initialement une tension de surface faible.

Afin d'améliorer encore la définition (c'est-à-dire par exemple la précision, la finesse, le respect de la conformation recherchée) du motif réalisé, le procédé selon l'invention pourra également comprendre, préalablement à ladite étape de formation dudit motif primaire, une étape de calandrage dudit substrat pour notamment lisser, aplanir, la surface de ce dernier avant ladite opération d'enduction.

De manière avantageuse, le procédé selon l'invention pourra également comprendre une ou plusieurs opérations d'adjonction de charge(s) et / ou d'additif(s) dans la composition à base de polyuréthane réactif réticulable à l'humidité, en vue d'une part de
faciliter la mise en oeuvre du procédé de l'invention (comportement rhéologique de la composition à l'état fondu, vitesse de réticulation, etc.) et, d'autre part, d'améliorer ou de moduler les caractéristiques mécaniques (adhésion au substrat, résistance à l'abrasion, tenue au feu ou aux UV, etc.) et / ou esthétique (couleur, brillance, réflexion, sensation au toucher, etc.) du motif obtenu à l'issue du procédé de l'invention.

A ce titre, la ou les charges concernées pourront être organiques (poudre de bois, etc.), minérales (silice, microbilles de verre, hydroxyde d'aluminium, carbonates de calcium et / ou de magnésium, etc.), métalliques (poudres ou paillettes d'or, de cuivre, de nickel, etc.) ou encore synthétiques (microcapsules renfermant un agent actif ou un agent gonflant, etc.). Parmi les additifs envisageables, on peut citer par exemple : un ou plusieurs agents colorants (par exemple sous forme d'oxyde(s) métallique(s) en poudre), une substance fluorescente ou phosphorescente, un agent inhibiteur d'UV, un agent catalyseur de la réaction de réticulation à l'humidité, un additif de matification, etc.

Selon que l'on souhaite modifier les propriétés en surface ou à coeur du motif, le procédé de l'invention pourra alors avantageusement comprendre :
- une opération de préparation et d'introduction de ces charges et / ou d'additifs dans la composition à base de polyuréthane réactif réticulable à l'humidité à l'état fondu, de préférence préalablement à ladite opération d'enduction, et / ou
- une opération de saupoudrage de ces charges et / ou d'additifs à la surface du motif primaire formé, après ladite étape d'enduction, et de préférence après l'éventuelle étape de laminage.

Une telle opération de saupoudrage pourra avantageusement être précédée d'une opération de réchauffage secondaire (par exemple à l'aide d'un radiant IR secondaire) du motif primaire afin d'abaisser, au besoin, la viscosité de la composition formant ce dernier au voisinage de sa surface, et de faciliter ainsi l'incorporation desdit(e)s charges et / ou additifs.

L'invention concerne également, en tant que telle, une installation 1 (non revendiquée) pour la réalisation en continu d'un motif à la surface d'un substrat 2 souple. L'installation 1 en question est avantageusement une installation permettant la mise en oeuvre d'un procédé de réalisation en continu d'un motif à la surface d'un substrat souple conforme à
l'invention, de sorte que la description exposée dans ce qui précède en relation avec le procédé selon l'invention reste valable et applicable, *mutatis mutandis,* à la présente installation 1. II s'agit préférentiellement d'une installation industrielle, avantageusement automatisée, conçue pour traiter de manière sensiblement ininterrompue une grande superficie d'un substrat donné.

Un mode de réalisation particulièrement préférentiel de l'installation selon l'invention est illustré de manière schématique à la figure 2. Les flèches présentes sur la figure 2 indiquent le sens préférentiel de progression dudit substrat 2 relativement aux différents postes et dispositifs que comprend ladite installation 1, et qui vont faire ci-après l'objet d'une description détaillée. Les termes « amont » et « *aval* » utilisés dans ce qui suit seront préférentiellement à interpréter en considération du sens de progression indiqué par ces flèches (et indépendamment d'une quelconque altitude de l'un ou l'autre desdits postes et dispositifs).

L'installation 1 selon l'invention comprend un poste 3 de formation d'un motif primaire au moyen d'un dispositif d'enduction 4 dudit substrat 2 avec une composition thermofusible qui se trouve à l'état fondu. Comme exposé précédemment, ledit substrat 2 est un substrat souple, qui comprend de préférence une étoffe. Le motif en question est quant à lui de préférence un motif discret, discontinu. La composition thermofusible concernée par l'installation selon l'invention est une composition à base de polyuréthane réactif qui est réticulable à l'humidité pour former un polyuréthane thermodurcissable, avantageusement conforme à la description qui en a été faite précédemment en lien avec le procédé de l'invention.

De préférence, ledit dispositif d'enduction 4 est un dispositif d'enduction par transfert comprenant un cylindre gravé 5, c'est-à-dire à l'aide d'un cylindre dont la surface externe est pourvue d'une ou plusieurs cavités (ou cellules), destinées à recevoir ladite composition fondue et dont la forme est représentative de celle dudit motif primaire. Ledit cylindre gravé 5 peut par exemple être en acier chromé ou en acier cuivré chromé. De préférence, ledit dispositif d'enduction 4 comprend également un contre-cylindre 7 conçu et agencé pour maintenir ledit substrat 2 en contact étroit avec la surface 6 du cylindre gravé 5.

De manière plus préférentielle encore, ledit dispositif d'enduction 4 est un dispositif d'enduction par transfert direct depuis ledit cylindre gravé 5 sur ledit substrat 2 souple. En d'autres termes, ledit dispositif d'enduction 4 est avantageusement dépourvu de tapis ou de support de transfert intermédiaire, sur lequel serait réalisé le motif primaire par dépôt de ladite composition fondue, avant transfert dudit motif primaire sur ledit substrat 2. Ledit dispositif d'enduction 4 est ainsi relativement simple et facile à mettre en oeuvre.

De préférence, ledit cylindre gravé 5 est équipé d'un moyen de chauffage et de régulation de la température de sa surface 6 gravée. Ce moyen de chauffage et de régulation peut être interne audit cylindre gravé 5 (fluide caloporteur, résistance électrique ou autre) ou externe (par exemple, un radiant IR positionné au-dessus dudit cylindre gravé 5, en regard de la surface 6 de ce dernier. De la sorte, la surface 6 du cylindre gravé 5 peut avantageusement être portée et maintenue à une température élevée, de préférence sensiblement voisine de la température de fusion de ladite composition, de sorte à contrôler précisément la viscosité de cette dernière.

Alternativement, il pourra être envisagé que ledit dispositif d'enduction 4 comprenne un cadre rotatif.

De préférence, ledit poste de formation 3 d'un motif primaire comprend un moyen de préparation 8 de ladite composition conçu pour porter cette dernière à l'état fondu, de préférence à une température comprise entre 80 et 170°C, ainsi qu'un moyen de dépose de ladite composition à l'état fondu à la surface 2 du cylindre gravé 5. Par exemple de type fondoir, ledit moyen de préparation 8 pourra avantageusement être maintenu sous une atmosphère dont l'humidité relative est particulièrement contrôlée (voire idéalement sous une atmosphère sensiblement dépourvue de toute trace d'humidité), de sorte à prévenir autant que possible la présence d'une humidité relative suffisante pour initier et entretenir la réaction de réticulation de ladite composition avant la formation dudit motif primaire. Ledit poste de formation 3 du motif primaire peut en outre avantageusement comprendre une racle, ou un dispositif similaire, conçu pour évacuer l'excès de composition fondue déposée à la surface 6 du cylindre gravé 5 et assurer ainsi un bon remplissage des cavités de ce dernier et une bonne définition du motif primaire.

De préférence, l'installation 1 comprend également un dispositif de fourniture du substrat 2 à traiter, positionné en amont dudit poste de formation 3 du motif primaire. Un tel dispositif de fourniture peut être de tout type connu et, par exemple, comprendre un dévidoir apte à recevoir ledit substrat 2 à traiter, lorsque celui-ci se présente avantageusement enroulé en bobine, et un moyen d'amenée du substrat 2 déroulé en direction du dispositif d'enduction 4 dudit poste de formation 3 du motif primaire.

Avantageusement, l'installation 1 selon l'invention pourra comprendre un moyen de réchauffage primaire 9 (par exemple de type radiant IR) du motif primaire formé, positionné de préférence immédiatement en aval dudit dispositif d'enduction 4, tel qu'illustré à la figure 2. La présence d'un tel moyen de réchauffage primaire 9 favorisera l'obtention de la définition recherchée dudit motif primaire, en régulant la viscosité de la composition formant ce dernier et en évitant notamment que la composition qui forme ledit motif primaire ne fige trop rapidement.

Optionnellement, l'installation 1 selon l'invention pourra également comprendre, en aval dudit poste de formation 3 du motif primaire, un moyen de laminage 10 de la surface du substrat 2, au niveau de laquelle a été formé ledit motif primaire, de manière à contrôler l'épaisseur et l'aspect de surface (aplanissement, matification, etc.) de ce dernier, et/ou sa profondeur de pénétration dans l'épaisseur du substrat. Tel qu'illustré en exemple à la figure 2, un tel moyen de laminage 10 pourra comprendre un cylindre lamineur 11 et un contre-cylindre 12, dont l'écartement relatif est réglable selon la pression que l'on souhaite exercer sur ledit motif primaire.

Selon l'invention, ladite installation 1 comprend, en aval dudit poste de formation 3 du motif primaire, un poste de réticulation 13 à l'humidité de ladite composition formant le motif primaire pour obtenir, à partir dudit motif primaire, un motif secondaire en polyuréthane thermodurcissable. De préférence, ledit motif secondaire forme alors directement, en sortie dudit poste de réticulation 13, le motif (final) que l'on cherche à réaliser. Alternativement, et sans sortir pour autant du cadre de l'invention, l'installation 1 selon l'invention pourra optionnellement comprendre un ou plusieurs postes ou moyens additionnels (moyen de traitement de surface, etc.) visant par exemple à modifier l'apparence ou les propriétés dudit motif secondaire en vue d'obtenir *in fine* ledit motif final.

Comme évoqué ci-avant en relation avec le procédé de l'invention, une telle composition réticulable à l'humidité ne nécessite pas nécessairement d'équipement ou de moyen technique de réticulation spécifique et complexe, la réticulation pouvant en effet intervenir sous la seule action de l'humidité relative de l'air ambiant environnant ou de celle contenue dans ledit substrat 2. Dès lors, le poste de réticulation 13 de l'installation 1 selon l'invention peut ne pas comprendre de moyens actifs spécifiquement conçus pour assurer la réticulation de ladite composition. Dans ce cas, ledit poste de réticulation 13 sera avantageusement confondu avec tout ou partie des moyens et dispositifs de ladite installation 1 positionnés en aval du poste de formation 3 du motif primaire, et plus spécifiquement en aval du dispositif d'enduction 4 de ce dernier, dans la mesure où ces derniers sont placés dans un environnement dont l'atmosphère présente naturellement une certaine humidité relative suffisante pour initier et entretenir la réaction de réticulation de la composition formant le motif primaire.

De préférence, l'installation 1 selon l'invention comprend un dispositif d'enroulement 14 (par exemple de type enrouleuse), d'empilement ou de repli sur lui-même dudit substrat 2 souple enduit, en vue par exemple de son transport et d'éventuelles opérations de transformation ou de confection à l'issue du procédé de l'invention. Ledit dispositif d'enroulement 14, d'empilement ou de repli, est dans ce cas avantageusement positionné en aval dudit poste de formation 3 du motif primaire et, de préférence, en aval dudit moyen de laminage 9 envisagé ci-dessus, tel que cela est représenté à la figure 2.

De préférence, ledit poste de réticulation 13 comprend un moyen de génération 15 d'un flux, forcé ou non, d'un gaz ou d'un mélange gazeux (ou flux gazeux) chargé en humidité (par exemple un flux de vapeur d'eau ou d'air humidifié). Ce moyen de génération 15 de flux gazeux chargé en humidité est avantageusement conçu pour permettre la mise en oeuvre de l'opération de pré-réticulation du procédé de l'invention décrite ci-dessus, et constitue donc, en d'autres termes, un dispositif de pré-réticulation de la composition formant ledit motif primaire. Comprenant de préférence une rampe de génération de vapeur d'eau, ledit moyen de génération 15 d'un flux d'un gaz ou d'un mélange gazeux chargé en humidité est avantageusement positionné en amont dudit dispositif d'enroulement 14. Compte tenu de la description qui a été faite ci-avant du procédé de l'invention, on comprend qu'un tel dispositif de pré-réticulation permet avantageusement d'autoriser la pré-réticulation de la composition formant ledit motif primaire, préalablement à l'enroulement du substrat 2 enduit à l'aide dudit dispositif d'enroulement 14. De préférence encore, ledit poste de réticulation 13 comprend également un moyen de contrôle et de régulation du débit dudit flux de gaz ou de mélange gazeux, de sorte à tenir compte des variations de conditions environnementales et climatiques, de la nature du substrat (matériau, porosité à l'humidité, etc.) et de l'épaisseur du motif primaire formé.

II en découle qu'il est dès lors possible, comme déjà évoqué ci-avant en lien avec le procédé de l'invention, d'atteindre des cadences de production très élevées. Egalement, en l'absence d'un tel dispositif de pré-réticulation, il serait nécessaire de recourir à des moyens intermédiaires (par exemple de type accumulateurs), potentiellement encombrants et coûteux, conçus pour allonger le temps de parcours du substrat 2 entre le poste de formation 3 du motif primaire et ledit dispositif d'enroulement 14, et laisser le temps à la composition formant le motif primaire de réticuler suffisamment à l'air libre pour que le substrat 2 enduit puisse être enroulé sans risque de détérioration du motif. L'installation 1 est par conséquent peu encombrante, et de conception relativement simple et de coût maîtrisé.

De manière avantageuse, l'installation 1 de l'invention comprend un dispositif de refroidissement 16 forcé de la composition du motif primaire, avantageusement positionné en amont dudit dispositif d'enroulement 14, d'empilement ou de repli sur lui-même du substrat 2 enduit. Par exemple, tel qu'illustré à la figure 2, ledit dispositif de refroidissement 15 pourra comprendre au moins un ou plusieurs cylindres refroidisseurs 17, préférentiellement positionné entre ledit moyen de génération 15 d'un flux d'un gaz ou d'un mélange gazeux chargé en humidité et ledit dispositif d'enroulement 14, d'empilement ou de repli sur lui-même du substrat 2 enduit. Alternativement, ledit dispositif de refroidissement 15 pourra comprendre un système de génération d'un flux d'air froid, d'air ou de gaz inerte comprimé dirigé vers le substrat 2 souple et le motif primaire formé à sa surface, ou encore un moyen de mise en contact du substrat enduit avec de la carboglace. Un tel dispositif de refroidissement 15 contribue avantageusement, comme le moyen de génération 15 de flux gazeux chargé en humidité évoqué ci-avant, à la compacité de l'installation 1 et à l'amélioration de ses performances en termes de cadence de fonctionnement.

Ceci étant, il reste parfaitement envisageable, sans pour autant sortir du cadre de l'invention, que l'installation 1 selon l'invention comprenne un tel moyen de génération 15 de flux gazeux chargé en humidité et/ou un tel moyen de refroidissement 15, sans toutefois comprendre de dispositif d'enroulement 14 (par exemple de type enrouleuse), d'empilement ou de repli sur lui-même dudit substrat 2 souple enduit.

Avantageusement, l'installation 1 selon l'invention pourra comprendre, en amont du poste de formation 3 dudit motif primaire, un poste de traitement de surface (non illustré) conçu pour augmenter la tension de surface dudit substrat 2 souple. Comprenant par exemple un moyen de traitement de surface de type dispositif Corona ou plasma, un tel poste de traitement de surface permet avantageusement d'améliorer l'adhésion de la composition déposée sur le substrat 2 par le dispositif d'enduction 4.

De préférence, l'installation 1 pourra comprendre, en amont du poste de formation 3 dudit motif primaire, un poste de calandrage 18 dudit substrat 2 pour lisser, aplanir, la surface de ce dernier. Tel qu'illustré à la figure 6, ce poste de calandrage comprendra alors de préférence au moins une paire de rouleaux de calandrage 19, 20.

De manière avantageuse, ladite installation 1 pourra également comprendre un ou plusieurs dispositifs d'adjonction de charge(s) et / ou d'additif(s) dans la composition à base de polyuréthane réactif réticulable à l'humidité, en vue d'une part de faciliter la mise en oeuvre de l'installation 1 de l'invention (comportement rhéologique de la composition à l'état fondu, vitesse de réticulation, etc.) et, d'autre part, d'améliorer ou de moduler les caractéristiques mécaniques (adhésion au substrat, résistance à l'abrasion, tenue au feu ou aux UV, etc.) et / ou esthétique (couleur, brillance, réflexion, sensation au toucher, etc.) du motif obtenu à l'aide de l'installation 1 de l'invention. Ces charge(s) et / ou d'additif(s) sont dans ce cas avantageusement conformes à la description qui en a été faite ci-avant en relation avec le procédé de l'invention.

Selon que l'on souhaite modifier les propriétés en surface ou à coeur du motif réalisé à la surface du substrat 2, l'installation 1 de l'invention pourra alors avantageusement comprendre :
- un dispositif (non illustré) de préparation et d'introduction (par exemple de type mélangeur statique) de ces charges et / ou d'additifs dans la composition à base de polyuréthane réactif réticulable à l'humidité à l'état fondu, de préférence positionné au niveau du moyen de préparation 7 de ladite composition, et / ou
- un dispositif de saupoudrage 21 de ces charges et / ou d'additifs à la surface du motif primaire formé, positionné en aval du poste de formation 3 du motif primaire et de son dispositif d'enduction 4. De préférence encore, tel qu'illustré à la figure 2, un tel dispositif de saupoudrage 18 sera positionné en aval dudit moyen de laminage 9, et avantageusement également en aval dudit moyen de génération 15 de flux gazeux chargé en humidité.

Tel qu'illustré à la figure 6, l'installation 1 de l'invention comprendra alors de préférence un moyen de réchauffage secondaire 22 (par exemple un radiant IR secondaire, lequel sera de préférence distinct du moyen de réchauffage primaire 8 envisagé ci-avant) du motif primaire afin d'abaisser, au besoin, la viscosité de la composition formant ce dernier au voisinage de sa surface, et de faciliter ainsi l'incorporation desdit(e)s charges et / ou additifs.

En définitive, les procédé et installation selon l'invention permettent la réalisation rapide, répétable et efficace à la surface d'un substrat d'un motif prédéfini particulièrement robuste et fiable. Ils ne nécessitent pas pour cela la mise en oeuvre de compétences ou de moyens techniques spécifiques complexes. Comme cela ressort de la description qui précède, le motif réalisé selon les procédés et installation de l'invention peuvent être à visée fonctionnelle et/ ou esthétique, Un substrat souple, à la surface duquel un motif aura été réalisé selon l'invention, trouvera notamment application dans le domaine des revêtements de sièges (par exemple automobiles) et fauteuils, des équipements de protection individuelle (EPI), de la bagagerie, de l'habillement ou encore des revêtements muraux.

### POSSIBILITE D'APPLICATION INDUSTRIELLE

L'invention trouve son application industrielle dans le domaine de la conception et de la fabrication de substrats souples pourvus de motifs formés par enduction, dans le domaine de la conception et de la mise en oeuvre de procédés de réalisation de tels motifs par enduction sur des substrats souples, ainsi que dans le domaine de la conception, de la fabrication et de l'utilisation d'installations de mise en oeuvre de tels procédés.

## Revendications

1. - Procédé de réalisation en continu d'un motif, qui est soit discontinu soit continu et ajouré, à la surface d'un substrat souple, comprenant une étape de formation d'un motif primaire au moyen d'une opération d'enduction dudit substrat avec une composition thermofusible qui se trouve à l'état fondu, ladite opération d'enduction étant réalisée par transfert de ladite composition à l'état fondu sur ledit substrat à l'aide d'un cylindre gravé par transfert direct depuis ledit cylindre gravé sur ledit substrat, **caractérisé en ce que** ladite composition est une composition à base de polyuréthane réactif réticulable à l'humidité pour former un polyuréthane thermodurcissable, ledit substrat comprenant une étoffe poreuse à l'humidité et à ladite composition à base de polyuréthane réactif réticulable à l'humidité lorsque cette dernière se trouve à l'état fondu, ladite opération d'enduction étant réalisée directement sur ladite étoffe, ladite composition pénétrant au moins en partie l'épaisseur de cette dernière, et **en ce que** ledit procédé comprend, après ladite opération d'enduction, une étape de réticulation à l'humidité de la composition formant le motif primaire pour obtenir un motif secondaire en polyuréthane thermodurcissable, la surface du motif primaire qui n'est pas en contact avec le substrat restant libre au cours de ladite étape de réticulation.

2. - Procédé selon la revendication précédente, **caractérisé en ce que** ladite étape de réticulation inclut une opération de soumission dudit motif primaire à un flux d'un gaz ou d'un mélange gazeux chargé en humidité.

3. - Procédé selon l'une quelconque des revendications précédentes, **caractérisé en ce que** ladite étape de réticulation comprend une opération de pré-réticulation de la composition formant le motif primaire.

4. - Procédé selon la revendication précédente, **caractérisé en ce qu'**il comprend une étape d'enroulement sur lui-même dudit substrat enduit, laquelle étape d'enroulement est réalisée après ladite opération de pré-réticulation et avant la fin de ladite étape de réticulation.

5. - Procédé selon l'une quelconque des revendications précédentes, **caractérisé en ce qu'**il comprend une étape de refroidissement forcé de la composition du motif primaire.

6. - Procédé selon l'une des revendications précédentes, **caractérisé en ce qu'**il comprend, préalablement à ladite étape de formation dudit motif primaire, une étape de traitement de surface, par exemple de type traitement Corona, visant à augmenter la tension de surface dudit substrat.

## Patentansprüche

1. - Verfahren zur kontinuierlichen Herstellung eines Musters, das entweder diskontinuierlich oder kontinuierlich und durchbrochen ist, auf der Oberfläche eines flexiblen Substrats, umfassend einen Schritt zur Bildung eines Primärmusters durch einen Beschichtungsvorgang des Substrats mit einer Heißschmelz-Zusammensetzung, die sich in einem geschmolzenen Zustand befindet, wobei der Beschichtungsvorgang durch Übertragung der Zusammensetzung im geschmolzenen Zustand auf das Substrat mithilfe eines gravierten Zylinders durch direkte Übertragung von dem gravierten Zylinder auf das Substrat durchgeführt wird, **dadurch gekennzeichnet, dass** die Zusammensetzung eine Zusammensetzung auf der Basis eines reaktiven Polyurethans ist, die mit Feuchtigkeit vernetzbar ist, um ein wärmehärtendes Polyurethan zu bilden, das Substrat einen Stoff umfasst, der für Feuchtigkeit und die Zusammensetzung auf Basis eines reaktiven, feuchtigkeitsvernetzenden Polyurethans porös ist, wenn sich letztere in geschmolzenem Zustand befindet, wobei der Beschichtungsvorgang direkt auf dem Stoff durchgeführt wird und die Zusammensetzung zumindest teilweise die Dicke des Stoffes durchdringt, und dass das Verfahren nach dem Beschichtungsvorgang einen Schritt der Feuchtigkeitsvernetzung der das Primärmuster bildenden Zusammensetzung umfasst, um ein Sekundärmuster aus wärmehärtbarem Polyurethan zu erhalten, wobei die Oberfläche des Primärmusters, die nicht mit dem Substrat in Kontakt steht, während des Vernetzungsschritts frei bleibt.

2. - Verfahren nach dem vorhergehenden Anspruch, **dadurch gekennzeichnet, dass** der Vernetzungsschritt einen Vorgang einschließt, bei dem das Primärmuster einem Strom aus einem mit Feuchtigkeit beladenen Gas oder Gasgemisch ausgesetzt wird.

3. - Verfahren nach einem der vorhergehenden Ansprüche, **dadurch gekennzeichnet, dass** der Vernetzungsschritt einen Vorvernetzungsvorgang der Zusammensetzung, die das Primärmuster bildet, umfasst.

4. - Verfahren nach dem vorhergehenden Anspruch, **dadurch gekennzeichnet, dass** es einen Schritt des Aufwickelns des beschichteten Substrats auf sich selbst umfasst, wobei der Schritt des Aufwickelns nach dem Vorvernetzungsvorgang und vor dem Ende des Vernetzungsschritts durchgeführt wird.

5. - Verfahren nach einem der vorhergehenden Ansprüche, **dadurch gekennzeichnet, dass** es einen Schritt der Zwangskühlung der Zusammensetzung des Primärmusters umfasst.

6. - Verfahren nach einem der vorhergehenden Ansprüche, **dadurch gekennzeichnet, dass** es vor dem Schritt der Bildung des Primärmusters einen Schritt der Oberflächenbehandlung, z. B. vom Typ Corona-Behandlung, umfasst, um die Oberflächenspannung des Substrats zu erhöhen.

## Claims

1. - A method for continuously producing a pattern which is either discontinuous or continuous and openwork at the surface of a flexible substrate, comprising a step of forming a primary pattern by means of an operation of coating said substrate with a hot melt composition that is in the molten state, said coating operation being performed by transfer of said composition in the molten state to said substrate by means of an engraved cylinder by direct transfer from the engraved cylinder to the substrate, **characterized in that** said composition is a reactive polyurethane composition that is moisture crosslinkable to form a thermosetting polyurethane, said substrate comprises a fabric which is porous to moisture and to said moisture crosslinkable reactive polyurethane composition when the latter is in the molten state, said coating operation is performed directly on said fabric, said composition penetrating at least in part the thickness of the latter, and **in that** said method comprises, after said coating operation, a step of moisture crosslinking the composition forming the primary pattern to obtain a secondary pattern made of thermosetting polyurethane, the surface of the primary pattern that is not in contact with the substrate remaining free during said crosslinking step.

2. - The method according to the preceding claim, **characterized in that** said crosslinking step includes an operation of subjecting said primary pattern to a flow of gas or gaseous mixture filled with moisture.

3. - The method according to any one of the preceding claims, **characterized in that** said crosslinking step comprises an operation of pre-crosslinking the composition forming the primary pattern.

4. - The method according to the preceding claim, **characterized in that** it comprises a step of winding said coated substrate over itself, wherein said winding step is performed after said pre-crosslinking operation and before the end of said crosslinking step.

5. - The method according to any one of the preceding claims, **characterized in that** it comprises a step of forced cooling the composition of the primary pattern.

6. - The method according to one of the preceding claims, **characterized in that** it comprises, previously to said step of forming said primary pattern, a surface treatment step, for example of the Corona treatment type, aiming at increasing the surface tension of said substrate.
